# EUROPEAN PATENT APPLICATION

(11) **EP 4 636 048 A1**
(43) Date of publication of application: **22.10.2025**
(21) Application number: 24741572.2
(22) Date of filing: 11.01.2024
(51) Int. Cl.: C09D 11/322, B41J 2/01, B41M 5/00

(54) **INK FOR INKJET, INKJET HEAD, AND INKJET RECORDING DEVICE**

(30) Priority: 13.01.2023 JP 2023003921
(71) Applicant: Kyocera Corporation, Kyoto-shi, Kyoto 612-8501 (JP)
(72) Inventor: OOKODA, Hitoshi, Kyoto-shi, Kyoto 612-8501 (JP); SARUWATARI, Kitao, Kyoto-shi, Kyoto 612-8501 (JP)
(74) Representative: Viering, Jentschura & Partner mbB Patent- und Rechtsanwälte
(86) International application number: PCT/JP2024/000510
(87) International publication number: WO 2024/150800

(57) **Abstract**

An inkjet-printing ink includes first particles, second particles, an ultraviolet absorber, and an aqueous medium. The first particles each contain a pigment and a first resin. The second particles each contain a second resin. The second particles have a smaller average particle diameter than the first particles.

## Description

### TECHNICAL FIELD

The present invention relates to an inkjet-printing ink, an inkjet head, and an inkjet recording device.

### BACKGROUND OF INVENTION

Inkjet printing forms an image on a print medium using droplets of ink containing a color material by ejecting the droplets toward a print medium in response to, for example, an image signal (print signal) and depositing the droplets on the print medium. Examples of ink (inkjet-printing ink) used for inkjet printing include an aqueous ink obtained by dispersing a color material such as a pigment into an aqueous medium such as water. The aqueous ink has high safety. After droplets of the aqueous ink are deposited on a print medium, the aqueous ink forms an image on the print medium by allowing an aqueous medium contained in the aqueous ink to permeate into the print medium or to evaporate. Examples of such a water-based ink include the ink described in Patent Literature 1.

Patent Literature 1 describes an ink including a color material, an ultraviolet absorber, a resin, and an aqueous medium emulsifying or suspending the resin. Patent Literature 1 further describes an inkjet printing method performed on a medium by ejecting the ink onto the medium using an inkjet head, applying the ink to the medium, irradiating the ink adhering to the medium with an ultraviolet ray from an ultraviolet light source, thus raising the temperature to a temperature lower than the boiling temperature of the ink and causing less ink bleeding, and volatilizing at least a part of the aqueous medium contained in the ink for removal. Patent Literature 1 can obtain a printed product with sufficient gloss without surface matting, and can reduce ink bleeding more appropriately.

### CITATION LIST

### PATENT LITERATURE

Patent Literature 1: Japanese Unexamined Patent Application Publication No. 2019-89300

### SUMMARY

In one aspect of the present invention, an inkjet-printing ink includes first particles, second particles, an ultraviolet absorber, and an aqueous medium. The first particles each contain a pigment and a first resin. The second particles each contain a second resin. The second particles have a smaller average particle diameter than the first particles.

In another aspect of the present invention, an inkjet-printing ink includes first particles, an ultraviolet absorber, and an aqueous medium. The first particles each contain a pigment and a first resin. The ultraviolet absorber has an average particle diameter not more than an average particle diameter of the first particles.

In another aspect of the present invention, an inkjet-printing ink includes first particles, an ultraviolet absorber, and an aqueous medium. The first particles each contain a pigment and a first resin. A content of the ultraviolet absorber is 0.1 to 1.6 mass% inclusive.

### BRIEF DESCRIPTION OF THE DRAWINGS

FIG. 1 is a schematic diagram of an example inkjet recording device according to an embodiment of the present invention.
FIG. 2 is a conceptual diagram describing fixing of an image formed with inkjet-printing ink according to an embodiment of the present invention.

### DESCRIPTION OF EMBODIMENTS

Although embodiments of the present invention are described below, the present invention is not limited to these.

### Inkjet-Printing Ink

An inkjet-printing ink according to one embodiment of the present invention includes first particles each containing a pigment and a first resin, second particles each containing a second resin, an ultraviolet (UV) absorber, and an aqueous medium. The second particles have a smaller average particle diameter than the first particles.

In response to an image signal (print signal) corresponding to an image to be formed, for example, the inkjet-printing ink is applied to a print medium (recording medium) that is a substrate to be printed and dried. Thus, the pigment included in the inkjet-printing ink remains on the print medium, and an image (Note that text is also included in an image.) is formed on the print medium. During this formation, the second particles are fused together by, for example, melting of the second resin included in the second particles to fix the image formed with the pigment included in the inkjet-printing ink. Additionally, the first particles are fused with the second particles by, for example, melting of the first resin included in the first particles. This fusion further enhances the fixation of the image. Thus, the first resin included in the first particles further contributes to the fixing of the image and enhances the fixation of the image. As described above, the inkjet-printing ink includes the pigment and the first resin within the first particles, and thus can enhance the dispersion of the pigment while reducing uneven dispersion of the pigment in the formed image and also enhance the fixation of the image. The inkjet-printing ink includes a UV absorber. Thus, when irradiated with a UV ray, the inkjet-printing ink is heated, and the aqueous medium is more easily removable from the inkjet-printing ink. In the inkjet-printing ink, the second particles have a smaller average particle diameter than the first particles. Thus, the inkjet-printing ink facilitates removal of the aqueous medium from the inkjet-printing ink, and has improved quick-drying characteristics. This is seemingly because the evaporated aqueous medium can pass more easily through the inkjet-printing ink. In the inkjet-printing ink, the second particles have a smaller average particle diameter than the first particles. Thus, the second particles are more easily dispersed in the aqueous medium, and the inkjet-printing ink thus has enhanced fixation. As described above, the inkjet-printing ink has high quick-drying characteristics and high fixation.

As described above, the inkjet-printing ink is an ink (water-based ink) including an aqueous medium. The water-based ink is typically less easily dried than an ink including an organic solvent more highly volatile than water, and has low quick-drying characteristics. Particularly, when, for example, a resin such as a film into which the aqueous medium less easily permeates is used as a print medium, the quick-drying characteristics are notably low. Thus, the water-based ink is to have high quick-drying characteristics, for example, a water-based ink is to allow an aqueous medium such as water included in the water-based ink to evaporate more easily after deposited on a print medium. The inkjet-printing ink such as a water-based ink is to form an image highly stably fixed to the print medium. The inkjet-printing ink satisfies the above request. More specifically, the inkjet-printing ink is a water-based ink with high quick-drying characteristics and high fixation.

### First Particles

The first particles are, for example, pigment dispersoids formed by applying the first resin to the pigment to allow the pigment particles to stably disperse in an aqueous medium without aggregating. The first particles may be manufactured by any method, for example, a method including polymerizing monomers (or a mixture of monomers of two or more types) serving as a material for the first resin to obtain the first resin, and placing the obtained first resin into a bead mill together with the pigment for dispersion. The first particles may be self-dispersible pigment particles or pigment-containing resin particles.

The average particle diameter of the first particles is adjustable by, for example, adjusting the dispersion conditions in the bead mill. The average particle diameter of the first particles is adjustable by, for example, filtration using a filter, or more specifically, changing the number of times of filtration (number of times of passage) or the type of filter to be used. The average particle diameter of the first particles is also adjustable by repeating a dispersion operation in the bead mill and filtration using a filter. An example of the bead mill is a bead mill from Ashizawa Finetech Ltd. Examples of the conditions of a dispersion operation in the bead mill include a bead diameter and a rotational rate of a rotor. The zeta potential of the first particles and the content of coarse particles included in the first particles are also adjustable in the same manner as or in a similar manner to the adjustment of the average particle diameter. Pigment

Any pigment that can form an intended image (allowing expressing the colors constituting an intended image), such as known organic pigments and inorganic pigments, may be used as the pigment. Examples of the organic pigments include azo pigments, polycyclic pigments, nitro pigments, nitroso pigments, and aniline black. Examples of the azo pigments include azo lake pigments, insoluble azo pigments, condensed azo pigments, and chelate azo pigments. Examples of the polycyclic pigments include phthalocyanine pigments, perylene pigments, anthraquinone pigments, quinacridone pigments, dioxazine pigments, thioindigo pigments, isoindolinone pigments, and quinophthalone pigments. Examples of the inorganic pigments include carbon blacks such as acetylene black and lamp black.

The pigments may be classified by color. For example, the pigments include a black pigment, a magenta or red pigment, an orange or yellow pigment, and a green or cyan pigment.

Examples of the black pigment include C.I. Pigment Black 7.

Examples of the magenta or red pigment include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 150, C.I. Pigment Red 166, C.I. Pigment Red 177, C.I. Pigment Red 178, C.I. Pigment Red 202, and C.I. Pigment Red 222.

Examples of the orange or yellow pigment include C.I. Pigment Orange 31, C.I. Pigment Orange 34, C.I. Pigment Orange 36, C.I. Pigment Orange 43, C.I. Pigment Orange 61, C.I. Pigment Orange 63, C.I. Pigment Orange 71, C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 95, C.I. Pigment Yellow 109, C.I. Pigment Yellow 110, Pigment Yellow 120, C.I. Pigment Yellow 128, C.I. Pigment Yellow 138, C.I. Pigment Yellow 139, C.I. Pigment Yellow 151, C.I. Pigment Yellow 154, C.I. Pigment Yellow 155, C.I. Pigment Yellow 173, C.I. Pigment Yellow 180, C.I. Pigment Yellow 185, and C.I. Pigment Yellow 193.

Examples of the green or cyan pigment include C.I. Pigment Blue 15, C.I. Pigment Blue 15:2, C.I. Pigment Blue 15:3, C.I. Pigment Blue 16, C.I. Pigment Blue 60, and C.I. Pigment Green 7.

The pigment may be used alone or in combination with one or more other types.

### First Resin

Examples of the first resin include a resin adhering to the pigment to allow the first particles to stably disperse in an aqueous medium (e.g., a disperse polymer, a dispersant polymer, and a polymer dispersant), or more specifically, a resin including a portion adhering to the pigment (hydrophobic portion) and a portion exerting dispersion of the first particles (hydrophilic portion). Examples of the first resin include a styrenic resin. Examples of the styrenic resin include a copolymer of styrene with a carboxylic acid component such as a carboxylic acid or a carboxylic acid ester (e.g., at least one selected from the group consisting of acrylic acid, methacrylic acid, acrylic acid esters, methacrylic acid esters, and maleic acid). Specifically, examples of such styrenic resins include styrene-acrylic acid copolymer, styrene-acrylic acid ester copolymer, styrene-acrylic acid-acrylic acid ester copolymer, styrene-methacrylic acid copolymer, styrene-acrylic acid-methacrylic acid copolymer, styrene-methacrylic acid ester copolymer, styrene-methacrylic acid-methacrylic acid ester copolymer, styrene-methacrylic acid-acrylic acid ester copolymer, styrene-acrylic acid ester-methacrylic acid copolymer, styrene-acrylic acid ester-methacrylic acid ester copolymer, styrene-acrylic acid ester-methacrylic acid-methacrylic acid ester copolymer, styrene-acrylic acid-acrylic acid ester-methacrylic acid-methacrylic acid ester copolymer, styrene-maleic acid copolymer, and styrene-maleic acid-acrylic acid ester copolymer. Examples of the acrylic acid esters include methyl acrylate, methyl acrylate, butyl acrylate, and methoxypolyethylene glycol acrylate. Examples of the methacrylic acid esters include methyl methacrylate, methyl methacrylate, butyl methacrylate, and methoxypolyethylene glycol methacrylate. The first resin may be used alone or in combination with one or more other types.

For the temperature of an inkjet head and the drying temperature of inkjet-printing ink, for example, a resin having a predetermined glass transition temperature Tg is selected as the first resin as appropriate. The glass transition temperature Tg of the first resin is, for example, higher than or equal to 50 °C and lower than 70 °C. Note that the glass transition temperature Tg (glass transition point) is a temperature causing glass transition, and, for example, a temperature (glass transition temperature) obtained by performing measurement with differential scanning calorimetry (DSC).

For the glass transition temperature of the second resin and the drying temperature of inkjet-printing ink, for example, a resin having a predetermined weight-average molecular weight is selected as the first resin as appropriate, and the weight-average molecular weight of the first resin may be, for example, 5,000 to 30,000 inclusive. Note that the weight-average molecular weight may be measured with a typical molecular weight determination method, or more specifically, by gel permeation chromatography (GPC).

### Second Particles

The second particles may be, for example, particles each containing the second resin as a main component, or particles of the second resin. The second particles are resin particles (e.g., fixing polymer particles, fixing agent polymer particles, or polymer fixing agent particles) enhancing the fixation of the image formed with the pigment included in the inkjet-printing ink. The second resin may be any resin (e.g., fixing polymer, fixing agent polymer, or polymer fixing agent) enhancing the fixation, for example, a thermoplastic resin that is thermally fused. Particles of the second resin made of such a thermally fused resin and contained in the second particles are fused by heating the inkjet-printing ink, and the second resin can enhance the fixation when the second particles are fused together. Before being heated, for example, before the inkjet-printing ink is ejected, the second particles remain as particles (solid) in the inkjet-printing ink. Thus, the second particles are dispersed in the aqueous medium with a low ability (e.g., solubility in water) to be dissolved in an aqueous medium included in the inkjet-printing ink. To enhance the fixation, the above thermally fused resin forming the second resin may have a glass transition temperature Tg of higher than the temperature (e.g., normal temperature) of the inkjet-printing ink before being heated, or more specifically, 70 to 120 °C inclusive, or 70 to 110 °C inclusive. The second resin may include a component different from the component of the first resin, or the second resin may include the same component as the first resin, but the first particles differ from the second particles in including a pigment. More specifically, the second particles may include a component other than the second resin, but do not include a pigment.

Examples of the second resin include styrenic resins, silicone resins, polyester resins, and polyurethane resins. The second resin may be used alone or in combination with one or more other types.

Examples of the above styrenic resins include a copolymer of styrene with a carboxylic acid component such as a carboxylic acid or a carboxylic acid ester (e.g., at least one selected from the group consisting of acrylic acid, methacrylic acid, acrylic acid esters, methacrylic acid esters, and maleic acid). More specifically, examples of the styrenic resins include a copolymer of styrene with at least one component selected from the group consisting of acrylic acid, methacrylic acid, acrylic acid esters, and methacrylic acid esters. Examples of the styrenic resins include styrene-acrylic acid copolymer, styrene-acrylic acid ester copolymer, styrene-acrylic acid- acrylic acid ester copolymer, styrene-methacrylic acid copolymer, styrene-acrylic acid-methacrylic acid copolymer, styrene-methacrylic acid ester copolymer, styrene-methacrylic acid-methacrylic acid ester copolymer, styrene-methacrylic acid-acrylic acid ester copolymer, styrene-acrylic acid ester-methacrylic acid copolymer, styrene-acrylic acid ester-methacrylic acid ester copolymer, styrene-acrylic acid ester-methacrylic acid-methacrylic acid ester copolymer, styrene-acrylic acid-acrylic acid ester-methacrylic acid-methacrylic acid ester copolymer, styrene-maleic acid copolymer, and styrene-maleic acid-acrylic acid ester copolymer. Examples of the acrylic acid esters include methyl acrylate, methyl acrylate, butyl acrylate, and methoxypolyethylene glycol acrylate. Examples of the methacrylic acid esters include methyl methacrylate, methyl methacrylate, butyl methacrylate, and methoxypolyethylene glycol methacrylate.

Examples of the silicone resin include side-chain modified silicone oil, one-end modified silicone oil, both-end modified silicone oil, and side-chain both-end modified silicone oil.

The polyester resin is a polymer formed by ester bonds between a carboxylic acid with a valency of 2 or more and an alcohol with a valency of 2 or more. Examples of dicarboxylic acids used in the polyester resin include terephthalic acid, isophthalic acid, orthophthalic acid, 2,6-naphthalenedicarboxylic acid, sulfoisophthalic acid, succinic acid, adipic acid, azelaic acid, sebacic acid, 1,10-decanedicarboxylic acid, and dimer acid. Examples of carboxylic acids in the polyester resin with a valency of 3 or more include trimellitic acid and pyromellitic acid. Examples of dihydric alcohols used in the polyester resin include ethylene glycol, 1,2-propylene glycol, 1,3-propylene glycol, 1,4-butanediol, 1,5-pentanediol, 1,6-hexanediol, 1,9-nonanediol, neopentyl glycol, 3-methyl-1,5-pentanediol, diethylene glycol, triethylene glycol, polytetraethylene glycol, 1,4-cyclohexanedimethanol, and ethylene oxide adducts of bisphenol A.

The polyurethane resin is a polymer formed by urethane bonds between a polyhydric alcohol (polyol) with a valency of 2 or more and an isocyanate (polyisocyanate) with a valency of 2 or more. Examples of the polyols used in the polyurethane resin include polypropylene glycol, polyethylene glycol, polytetramethylene glycol, poly(ethylene adipate), poly(diethylene adipate), poly(propylene adipate), poly(tetramethylene adipate), poly(hexamethylene adipate), poly-ε-caprolactone, poly(hexamethylene carbonate), and silicone polyols. Examples of the polyisocyanates used in the polyurethane resin include tolylene diisocyanate, 4,4'-diphenylmethane diisocyanate, xylylene diisocyanate, naphthalene diisocyanate, hexamethylene diisocyanate, hydrogenated tolylene diisocyanate, hydrogenated 4,4'-diphenylmethane diisocyanate, isophorone diisocyanate, and tetramethylxylylene diisocyanate.

The weight-average molecular weight of the second resin is not particularly limited, but may be, for example, 300,000 to 1,500,000 inclusive to enhance the fluidity of the inkjet-printing ink and to reduce ink ejection variation, or 400,000 to 1,000,000 inclusive to have more appropriate fluidity to reduce ink ejection variation. Note that, in the same manner as or a similar manner to the first resin, the weight-average molecular weight may be measured by typical molecular weight determination, or more specifically, by GPC. More specifically, the weight-average molecular weight of the second resin is obtained by freeze-drying a water dispersion containing the second resin to obtain powdery second resin, dissolving the resultant second resin in tetrahydrofuran (THF), and subjecting the resultant solution to GPC analysis.

The method for manufacturing the second particles is not particularly limited, and may be, for example, emulsion polymerization of monomers (or a mixture of monomers of two or more types) serving as a material for the second resin. The average particle diameter of the second particles is adjustable by, for example, adjusting the conditions of the emulsion polymerization. Examples of the conditions for the emulsion polymerization include conditions for agitating monomers before emulsion polymerization with a disperser and conditions for agitating monomers with a disperser during emulsion polymerization. The agitation conditions include, for example, the rotational rate of a blade included in the disperser and processing time. Examples of the disperser include a high-speed batch disperser. Examples of the high-speed batch disperser include TERECORTAR R from PRIMIX Corporation. The average particle diameter of the second particles is adjustable by filtration with a filter. The zeta potential of the second particles is adjustable with the same adjusting method as or a similar adjusting method to that for the average particle diameter.

### UV Absorber

The UV absorber is not particularly limited, and examples include benzotriazole-based UV absorbers, triazine-based UV absorbers, benzophenone-based UV absorbers, benzoate-based UV absorbers, and benzoimidazole-based UV absorbers. The UV absorber may also be in liquid form. Examples of the benzotriazole-based UV absorbers include UV absorbers having a benzotriazole structure, or more specifically, 2-(2'-Hydroxy-5'-methylphenyl)benzotriazole, 2-(2'-Hydroxy-5'-octylphenyl)benzotriazole, 2-[2-Hydroxy-3-(3,4,5,6-tetrahydrophthalimide-methyl)-5-methylphenyl]benzotriazole, 2-[2'-Hydroxy-3',5'-bis(α,α'-dimethylbenzyl)phenyl]-2H-benzotriazole, 2-(2'-Hydroxy-3',5'-di-t-amylphenyl)benzotriazole, 2-(2'-Hydroxy-3',5'-di-t-butylphenyl)benzotriazole, 2-(2'-Hydroxy-3'-t-butyl-5'-methylphenyl)benzotriazole, and 2-(2'-Hydroxy-3'-t-butyl-5'-methylphenyl)-5-chlorobenzotriazole. Examples of the triazine-based UV absorbers include UV absorbers having a hydroxyphenyltriazine structure, or more specifically, 2,4,6-Tris(2-hydroxy-4-hexyloxy-3-methylphenyl)-1,3,5-triazine, and 2,4-diphenyl-6-(2-hydroxy-4-hexyloxyphenyl)-1,3,5-triazine. Examples of the benzophenone-based UV absorbers include a dihydroxybenzophenone compound such as 2,2'-dihydroxybenzophenone, and 2-hydroxy-4-alkoxybenzophenone. Examples of the benzoate-based UV absorbers include resorcinol monobenzoate. Examples of the benzoimidazole-based UV absorbers include phenylbenzimidazole sulfonic acid.

The UV absorbers basically convert UV rays into heat, in addition to having higher UV absorptivity than typical substances. After converting UV rays into heat, the UV absorbers are basically restored to the original state of being capable of converting UV rays into heat to repeatedly convert UV rays into heat. An UV polymerization initiator included in a UV curing (polymerization) ink has a certain level of UV ray absorptivity, but may not generate heat during generation of, for example, radicals initiating polymerization, or a reaction of, for example, the generated radicals may not be an exothermic reaction. Additionally, for example, radicals are generated from UV rays simply once, and do not repeat the reaction. Thus, the UV absorbers may exclude the UV polymerization initiator.

The UV absorber may be used alone or in combination with one or more other types.

The UV absorbers can have an average particle diameter adjustable by, for example, pulverization. Examples of the pulverization include pulverization with agitation by a disperser. Examples of the disperser include a high-speed batch disperser. Examples of the high-speed batch disperser include TERECORTAR R from PRIMIX Corporation. The average particle diameter of the UV absorbers is adjustable by changing the agitation conditions, such as the rotational rate of a blade included in the disperser and processing time. The average particle diameter of the UV absorbers is also adjustable by filtration with a filter. Aqueous Medium

The aqueous medium may be any medium containing water, for example, an aqueous medium containing water as a main component (e.g., not less than 50 mass%), or an aqueous medium made of water. The content of water in the aqueous medium may be not less than 50 mass%, not less than 90 mass%, or 100 mass%. The aqueous medium may contain water, or may further contain a water-soluble organic solvent. More specifically, the aqueous medium may be an aqueous medium containing water and a water-soluble organic solvent. Examples of the water-soluble organic solvents include alcohol compounds, ketone compounds, glycol compounds, glycol ether compounds, lactam compounds, nitrogen-containing compounds, acetate compounds, thiodiglycol, glycerin, and dimethyl sulfoxide. Examples of the alcohol compounds include methanol, ethanol, isopropanol, and butanol. Examples of the ketone compounds include methyl ethyl ketone. Examples of the glycol compounds include ethylene glycol, 1,3-propanediol, propylene glycol, 1,2-pentanediol, 1,5-pentanediol, 1,2-octanediol, 1,8-octanediol, 3-methyl-1,3-butanediol, 3-methyl-1,5-pentanediol, diethylene glycol, triethylene glycol, and tetraethylene glycol. Examples of the glycol ether compounds include diethylene glycol diethyl ether, diethylene glycol monobutyl ether, ethylene glycol monomethyl ether, ethylene glycol monobutyl ether, diethylene glycol monomethyl ether, diethylene glycol monoethyl ether, diethylene glycol diethyl ether, triethylene glycol monomethyl ether, triethylene glycol monoethyl ether, triethylene glycol monobutyl ether, and propylene glycol monomethyl ether. Examples of the lactam compounds include 2-pyrrolidone and N-methyl-2-pyrrolidone. Examples of the nitrogen-containing compounds include 1,3-dimethylimidazolidinone, formamide, and dimethylformamide. Examples of the acetate compounds include diethylene glycol monoethyl ether acetate. The water-soluble organic solvent may be used alone or in combination with one or more other types. The aqueous medium may function as a solvent or a disperse medium.

### Content

The inkjet-printing ink includes the first particles, the UV absorber, and the aqueous medium, and may further include the second particles. Although the contents of these components are not particularly limited, the content of the first particles may be 3.0 to 8.0 parts by mass inclusive with respect to 100 parts by mass of the inkjet-printing ink. The content of the second particles may be 1.0 to 15.0 parts by mass inclusive with respect to 100 parts by mass of the inkjet-printing ink.

The content of the UV absorber may be 0.1 to 1.6 parts by mass inclusive with respect to 100 parts by mass of the inkjet-printing ink. More specifically, the content of the UV absorber may be 0.1 to 1.6 parts by mass inclusive. As described later, when the inkjet-printing ink adhering to a print medium is irradiated with UV rays to generate heat, the inkjet-printing ink including the UV absorber in an amount of not less than 0.1 parts by mass can generate more heat. Thus, the inkjet-printing ink has improved drying performance and improved fixation. When the inkjet-printing ink includes the second particles, the inkjet-printing ink has further improved fixation with, for example, fusion of the second particles. When the inkjet-printing ink adhering to a print medium absorbs more UV rays in a portion adjacent to an UV irradiation source, fewer UV rays may be transmitted in a direction away from the irradiation source, and less heat may be generated in a portion away from the irradiation source. However, the content of the UV absorber is not more than 1.6 parts by mass, and thus the UV absorber is less likely to cause such phenomena. Thus, the inkjet-printing ink has improved drying performance and improved fixation. Particularly, when a print medium to which the inkjet-printing ink adheres is irradiated with UV rays, the drying performance of the inkjet-printing ink can be improved in a portion adjacent to the print medium, in which the inkjet-printing ink is less easily dried. The inkjet-printing ink including the second particles has further improved fixation with, for example, fusion of the second particles.

The inkjet-printing ink including the first particles, the second particles, the UV absorber, and the aqueous medium may include any component other than these, or the remaining part other than these may be the aqueous medium.

### Average Particle Diameter

In the inkjet-printing ink, the second particles have a smaller average particle diameter than the first particles, or more specifically, the ratio of the average particle diameter of the second particles to the average particle diameter of the first particles (average particle diameter of the second particles/average particle diameter of the first particles) is less than 1. Thus, the inkjet-printing ink facilitates removal of the aqueous medium from the inkjet-printing ink, and has improved quick-drying characteristics. This is seemingly because the evaporated aqueous medium can pass more easily through the inkjet-printing ink. Thus, the second particles are more uniformly dispersed in the aqueous medium easily, and the inkjet-printing ink thus has enhanced fixation. The above ratio (average particle diameter of the second particles/average particle diameter of the first particles) is less than 1, and may be not 0.6 to 0.9 inclusive to improve quick-drying characteristics and fixation.

Note that an example average particle diameter usable as the average particle diameter of the first particles is obtained by determining a dynamical structure factor with dynamic scattering using a particle size analyzer (zeta-potential, particle-size, and molecular-weight analysis system ELSZneo from Otsuka Electronics Co., Ltd.) using a helium-neon (HeNe) laser as a light source, and then performing a cumulant analysis. An example average particle diameter usable as the average particle diameter of the second particles is obtained by observing the second particles, from which the aqueous medium is removed by drying, using a scanning electron microscope (SEM) and analyzing the obtained image.

The first particles may have a greater average particle diameter than the second particles. For example, the average particle diameter of the first particles may be 80 to 100 nm inclusive to enhance the image quality of an image to be formed, for example, to achieve an intended image density or to enhance the color stability, or 85 to 95 nm inclusive to further enhance the image quality.

For example, due to aggregation, coarse particles may be unavoidably incorporated in the first particles. For example, the coarse particles have a particle diameter not less than 2 µm, or a particle diameter of 2 to 10 µm inclusive. The average particle diameter of the first particles is an average particle diameter excluding that of the coarse particle. More specifically, the inkjet-printing ink according to the present embodiment includes the first particles, the second particles, the UV absorber, and the aqueous medium. The first particles include coarse particles with a particle diameter not less than 2 µm. The average particle diameter of the first particles excluding the coarse particle is smaller than the average particle diameter of the second particles. Note that, in the inkjet-printing ink, the average particle diameter of the first particles is smaller than the average particle diameter of the second particles, independently of when the average particle diameter of the first particles is defined as an average particle diameter of the first particles including the coarse particle.

The first particles including fewer coarse particles enhance the fluidity of the inkjet-printing ink, reduce ejection variation of the inkjet-printing ink, and thus enhance the deposition accuracy of the inkjet-printing ink. Thus, for example, the first particles may include not more than 70,000 pieces/mL of coarse particles with a particle diameter of 2 to 10 µm inclusive, or may include not more than 40,000 pieces/mL of coarse particles to further enhance the deposition accuracy. Note that, although fewer coarse particles are to be included for improved deposition accuracy, the coarse particles can be reduced to about 30,000 pieces/mL at maximum. Thus, the first particles may include 30,000 to 70,000 pieces/mL inclusive of coarse particles with a particle diameter of 2 to 10 µm inclusive. Note that the number of pieces is the number of coarse particles per 1 mL of first particles. The number of coarse particles (quantity) may be counted with, for example, a counting particle size distribution analyzer (AccuSizerA700APS from Entegris, Inc.).

The second particles may have any average particle diameter smaller than the average particle diameter of the first particles. For example, the average particle diameter of the second particles may be 70 to 80 nm inclusive to enhance the image quality of an image to be formed and the fixation.

When the second particles have a small variation in the particle diameter, the inkjet-printing ink has less ink ejection variation, and enhances the deposition accuracy. Thus, the second particles may have a particle diameter variation, in standard deviation σ, for example, not more than 7 nm, or not more than 5 nm to further enhance the deposition accuracy. Note that the second particles may have smaller particle diameter variation for improvement of the deposition accuracy, but the particle diameter variation can be reduced to about 3 nm at minimum. The second particles thus may have particle diameter variation of 3 to 7 nm inclusive in standard deviation σ. Note that examples of the standard deviation σ include a value obtained by observing the second particles with an SEM, measuring the particle diameter from the obtained image, and calculating the standard deviation based on the obtained particle diameter. More specifically, after the inkjet-printing ink is applied to a film with a bar coat and dried at 40 °C, the dried resultant is observed with the SEM, the particle diameter is measured from the obtained image, and the standard deviation is calculated based on the obtained particle diameter.

The UV absorber with a small size has improved dispersion of the UV absorber, and improved weatherability of an image (an image formed with the inkjet-printing ink) fixed to a print medium. The average particle diameter of the UV absorber may thus be not more than the average particle diameter of the first particles. More specifically, the ratio of the average particle diameter of the UV absorber to the average particle diameter of the first particles (average particle diameter of the UV absorber/average particle diameter of the first particles) may be not more than 1. To further improve the weatherability, the above ratio (average particle diameter of the UV absorber/average particle diameter of the first particles) may be 0.6 to 1.0 inclusive. To improve the weatherability, the average particle diameter of the UV absorber may be 60 to 100 nm inclusive, or 60 to 80 nm inclusive to further improve the weatherability. The ratio of the average particle diameter of the UV absorber to the average particle diameter of the second particles (average particle diameter of the UV absorber/average particle diameter of the second particles) may be 0.75 to 1.25 inclusive to improve the weatherability.

Note that an example average particle diameter usable as the average particle diameter of the UV absorber is obtained by determining a dynamical structure factor with dynamic scattering using a particle size analyzer (zeta-potential, particle-size, and molecular-weight analysis system ELSZneo from Otsuka Electronics Co., Ltd.) using a helium-neon (HeNe) laser as a light source, and then performing a cumulant analysis.

### Zeta Potential

The second particles with a zeta potential of a large absolute value have improved image fixation. This is seemingly because the second particles with a zeta potential of a large absolute value have improved dispersion, and thus further improves image fixation. The absolute value of the zeta potential of the second particles may thus be greater than the absolute value of the zeta potential of the first particles. More specifically, the ratio of the absolute value of the zeta potential of the second particles to the absolute value of the zeta potential of the first particles (absolute value of the zeta potential of the second particles/absolute value of the zeta potential of the first particles) may be greater than 1. To facilitate the dispersion and further improve the fixation, the above ratio (absolute value of the zeta potential of the second particles/absolute value of the zeta potential of the first particles) may be 1.1 to 1.3 inclusive. To facilitate the dispersion and improve the fixation, the absolute value of the zeta potential of the second particles may be not less than 50 mV, or 55 to 60 mV inclusive to further facilitate the dispersion and further improve the fixation. Examples of the zeta potential include a value measured by electrophoretic light scattering (laser Doppler method), or more specifically, a value obtained by measuring a liquid containing particles (the first particles or the second particles) diluted 5000 times with water using a zeta potential measuring device by electrophoretic light scattering (laser Doppler method). Examples of the zeta potential measuring device include a zeta-potential, particle-size, and molecular-weight analysis system ELSZneo from Otsuka Electronics Co., Ltd.

### Other Components

In addition to the first particles, the second particles, the UV absorber, and the aqueous medium, the inkjet-printing ink may include components other than these (other components). Examples of the other components include components to be added to the inkjet-printing ink, such as penetrants, surfactants, pH adjusters, preservative, antifungal agents, anti-drying agents (humectants), chelating agents, defoaming agents, deoxidizers, conductivity enhancers, infrared absorbers, and anti-curl agents.

### Use

The inkjet-printing ink is used to form images with an inkjet recording device. As described above, the inkjet-printing ink has high quick-drying characteristics and high fixation. Thus, images formed by an inkjet recording device with the inkjet-printing ink have high fixation without issues that may occur after the inkjet-printing ink adheres to a print medium. For example, the print medium on which images are to be formed with the inkjet-printing ink is, but not limited to, paper, films, and fabrics. Examples of the paper include ordinary paper, fine-quality paper, matt coated paper, cast-coated paper, and photo paper. Examples of the films include a resin such as a polyethylene terephthalate (PET) film. Examples of the fabrics include woven fabrics, knitted fabrics, and nonwoven fabrics. The inkjet-printing ink has high quick-drying characteristics, and is usable to form images on a print medium with low ink permeability. Thus, the print medium may be the film. More specifically, the inkjet-printing ink is also used with an inkjet recording device to form images on films.

### Inkjet Recording Device

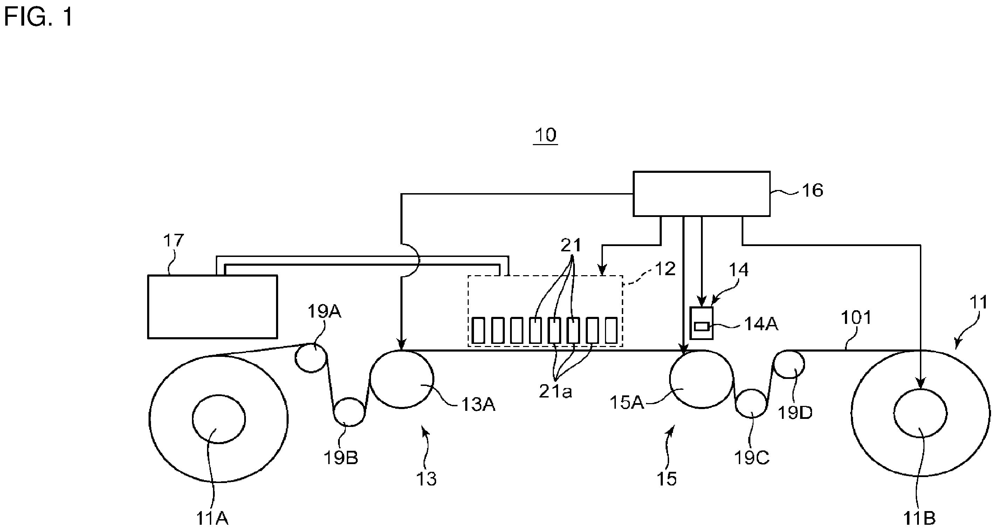

The inkjet recording device used to form images may be any inkjet recording device that forms images with the inkjet-printing ink. Examples of the inkjet recording device include an inkjet recording device illustrated in FIG. 1. More specifically, FIG. 1 is a schematic diagram of an inkjet recording device 10 according to an embodiment of the present invention.

As illustrated in FIG. 1, the inkjet recording device 10 includes an ejector 12 including at least one inkjet head 21, a transporter 11 that transports a print medium (a substrate to be printed) 101 to receive the inkjet-printing ink ejected from the inkjet head 21, and a UV irradiator 14 that irradiates the print medium 101 receiving the inkjet-printing ink with UV rays. The inkjet recording device 10 may further include a first heater 13 that heats the print medium 101 before receiving the inkjet-printing ink ejected from the ejector 12, and a second heater 15 that heats the print medium 101 after receiving the inkjet-printing ink ejected from the ejector 12. The inkjet recording device 10 further includes a controller 16 that controls the transporter 11, the ejector 12, the first heater 13, the UV irradiator 14, the second heater 15, and other components.

The transporter 11 transports the print medium 101 from a feed roller 11A to a take-up roller 11B. The inkjet recording device 10 includes, along a transport path along which the transporter 11 transports the print medium 101, the ejector 12, the first heater 13, the UV irradiator 14, and the second heater 15. The feed roller 11A feeds, to the ejector 12, the print medium 101 to receive the inkjet-printing ink ejected from the inkjet head 21. The take-up roller 11B collects the print medium 101 fed to the ejector 12. The transporter 11 may include rollers 19A to 19D to allow the print medium 101 to travel along a predetermined transport path while transporting the print medium 101 from the feed roller 11A to the take-up roller 11B. The feed roller 11A, the take-up roller 11B, and the rollers 19A to 19D may be driving rollers or driven rollers that transport the print medium 101 from the feed roller 11A to the take-up roller 11B.

Typically, as the print medium is transported at higher speeds, the printing speed increases, but the inkjet-printing ink adhering to the print medium is insufficiently dried, or the resultant image is more likely to have low quality or ink ejection variation. The inkjet-printing ink according to the present embodiment has high quick-drying characteristics. Thus, the inkjet-printing ink according to the present embodiment can form images without lowering the image quality while transporting the print medium at a high speed. The inkjet-printing ink according to the present embodiment is more likely to reduce ink ejection variation. Thus, using the inkjet-printing ink according to the present embodiment, particularly, using inkjet-printing ink with less ink ejection variation can reduce ink ejection variation while the print medium is transported at a high speed. Although the transporter 11 may transport the print medium 101 at any speed, the transportation speed may be relatively high, for example, 80 to 120 m/min inclusive, or more specifically, may be 100 m/min, because using the inkjet-printing ink according to the present embodiment can reduce degradation of the quality of images to be formed and ink ejection variation as described above.

The print medium 101 transported by the transporter 11 may be in a form of a single continuous sheet or in a form of individual sheets. For the print medium 101 in a form of individual sheets, the transporter 11 may include a transport belt. In this case, the transporter 11 may transport the print medium 101 while receiving the print medium 101 on the transport belt and transporting the transport belt in this state. As described above, the print medium 101 may be paper or fabrics. The inkjet-printing ink according to the present embodiment has high quick-drying characteristics, and is thus usable on a print medium with low permeability, or more specifically, on a film.

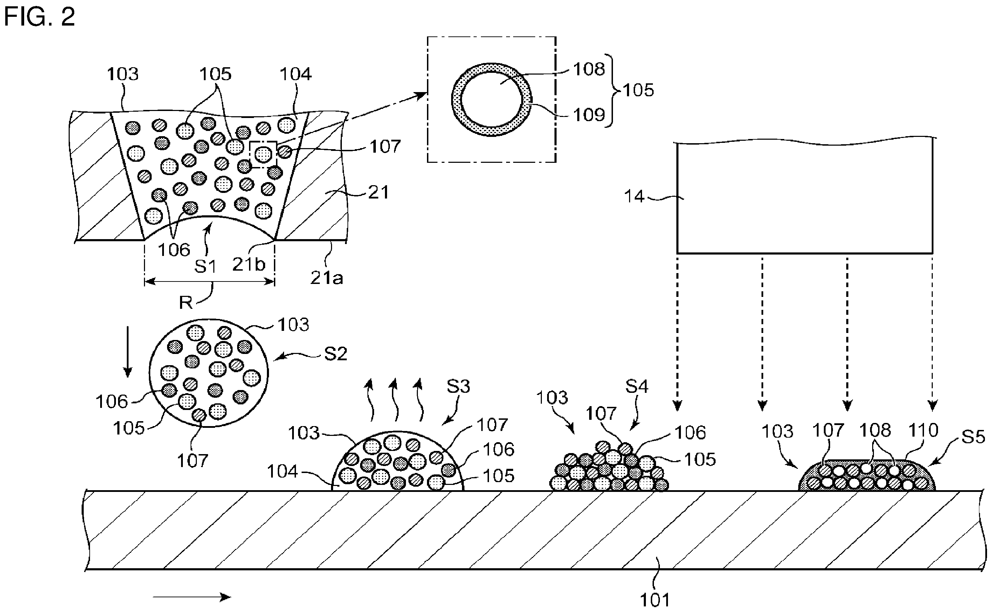

The ejector 12 ejects droplets of the inkjet-printing ink to the print medium 101 to apply the inkjet-printing ink to the print medium 101. The ejector 12 includes at least one inkjet head 21 that faces the print medium 101 and directly ejects ink onto the print medium 101, and an ink tank 17 storing the inkjet-printing ink to be supplied to the inkjet head 21. The inkjet head 21 ejects the inkjet-printing ink supplied from the ink tank 17 toward the print medium 101. The inkjet head 21 is held with an ejection surface 21a from which the inkjet-printing ink is ejected facing the print medium 101. As illustrated in FIG. 2, the ejection surface 21a of the inkjet head 21 has multiple exhaust ports 21b through which the inkjet-printing ink is ejected onto the print medium 101.

Typically, the inkjet head having smaller exhaust ports ejects smaller droplets of the inkjet-printing ink. Smaller droplets can form high-definition images but are more likely to cause ink ejection variation. The inkjet-printing ink according to the present embodiment is more likely to reduce ink ejection variation. Thus, while being ejected from the inkjet head with small exhaust ports, the inkjet-printing ink according to the present embodiment, or particularly, inkjet-printing ink causing less ink ejection variation can reduce ink ejection variation. Although the exhaust port 21b may have any diameter R allowing ejection of the inkjet-printing ink, the diameter R may be relatively small, for example, 10 to 15 µm inclusive, or more specifically, 12 µm because the inkjet-printing ink according to the present embodiment can reduce ink ejection variation as described above.

Typically, as the inkjet-printing ink is ejected at a higher driving frequency (ejection frequency), the printing speed increases, but the inkjet-printing ink adhering to the print medium is dried less sufficiently, or the resultant image is more likely to have low quality or ink ejection variation. The inkjet-printing ink according to the present embodiment has high quick-drying characteristics. Thus, the inkjet-printing ink according to the present embodiment can form images without lowering the image quality although the driving frequency is high. The inkjet-printing ink according to the present embodiment is more likely to reduce ink ejection variation. Thus, although the driving frequency is high, the inkjet-printing ink according to the present embodiment, or particularly, inkjet-printing ink causing less ink ejection variation can reduce ink ejection variation. The inkjet-printing ink according to the present embodiment can reduce degradation of the quality of images to be formed and ink ejection variation as described above. Thus, the ejector 12 may eject the inkjet-printing ink at any driving frequency, or more specifically, the driving frequency may be relatively high, for example, 60 to 100 kHz.

Note that, to print an image, the image may be divided into multiple sections (e.g., a lattice pattern) and each of the sections may undergo determination as to whether to receive pixels (dots), or whether pixels with different sizes may be formed stepwise. To form one pixel, the exhaust port 21b ejects one or more droplets. The reciprocal of a cycle in which one or more droplets forming one pixel are ejected from one of the exhaust ports 21b is a driving frequency.

The first heater 13 heats the print medium 101 to facilitate evaporation of the aqueous medium included in the inkjet-printing ink adhering to the print medium 101. The first heater 13 may include a first heating roller 13A that comes in contact with the print medium 101 to directly heat the print medium 101. The first heating roller 13A heats the print medium 101, and also functions as a roller in the transporter 11. Instead of or in addition to heating with the first heating roller 13A, the first heater 13 may heat the print medium 101 using hot air blown onto the print medium 101. The first heater 13 may heat the print medium 101 before, after, or before and after applying the inkjet-printing ink to the print medium 101. More specifically, the first heater 13 may be positioned upstream, downstream, or upstream and downstream from the ejector 12 in a direction in which the print medium 101 is transported.

The UV irradiator 14 irradiates the inkjet-printing ink adhering to the print medium 101 with UV rays to heat the inkjet-printing ink. The inkjet-printing ink according to the present embodiment includes the UV absorber in addition to the pigment, and is thus easily heatable. This heating melts the first resin contained in the first particles and the second resin contained in the second particles in the inkjet-printing ink. After the melted resins are fixed, an image formed with the pigments included in the inkjet-printing ink is fixed to the print medium 101. To emit UV rays, the UV irradiator 14 includes at least a light source 14A that emits UV rays. The UV irradiator 14 irradiates the inkjet-printing ink adhering to the print medium 101 with UV rays, and thus, irradiates the inkjet-printing ink after the inkjet-printing ink adheres to the print medium 101. More specifically, the UV irradiator 14 is positioned downstream from the ejector 12 in the direction in which the print medium 101 is transported.

The second heater 15 heats the print medium 101 to heat the inkjet-printing ink adhering to the print medium 101. Heating the second heater 15 assists the UV irradiator 14 in melting the first resin and the second resin. The second heater 15 assists the UV irradiator 14 in melting the resins, and is thus positioned near the UV irradiator 14. For example, the second heater 15 faces the UV irradiator 14 across the print medium 101. The second heater 15 may include a second heating roller 15A that comes in contact with the print medium 101 to directly heat the print medium 101. The second heating roller 15A heats the print medium 101, and functions as a roller in the transporter 11. Instead of or in addition to heating with the second heating roller 15A, the second heater 15 may heat the print medium 101 by blowing hot air onto the print medium 101.

The controller 16 controls the transporter 11, the ejector 12, the first heater 13, the UV irradiator 14, the second heater 15, and other components. More specifically, the controller 16 controls, for example, the speed of the transporter 11 transporting the print medium 101 and the driving frequency at which the ejector 12 ejects the inkjet-printing ink. The controller 16 includes a computer. Although not particularly illustrated, the controller 16 includes, for example, a central processing unit (CPU), a read-only memory (ROM), a random-access memory (RAM), and an external memory.

As described above, the inkjet recording device may be any inkjet recording device that forms images with the inkjet-printing ink. The inkjet recording device illustrated in FIG. 1 as an example can fix an image with high image quality to the print medium with the inkjet-printing ink. More specifically, the inkjet recording device can fix an image as illustrated in FIG. 2. Note that FIG. 2 is a conceptual diagram describing fixing of an image formed with the inkjet-printing ink according to an embodiment of the present invention. More specifically, the fixing is described with reference to a first state S1 to a fifth state S5 illustrated in the figure. FIG. 2 is a conceptual diagram, and thus the actual number or size of the components included in the inkjet-printing ink may be different.

First, in the first state S1, the inkjet-printing ink 103 is held in the inkjet head 21 (more specifically, before being ejected). In the inkjet-printing ink 103, the first particles 105, the second particles 106, and the UV absorber 107 are dispersed in the aqueous medium 104. More specifically, the inkjet-printing ink 103 includes the first particles 105, the second particles 106, the UV absorber 107, and the aqueous medium 104. The first particles 105 each include the pigment 108 and the first resin 109. More specifically, the first particles 105 may each be a pigment dispersoid with the first resin 109 adhering to the surface of the pigment 108, and in which particles of the pigment 108 do not aggregate.

In the second state S2, the inkjet-printing ink 103 is in a state (in a droplet state) of being jetted out of the inkjet head 21 toward the print medium 101 (more specifically, after being ejected and before being deposited). The inkjet-printing ink in the second state S2 (in terms of, for example, component ratio and component state) is basically in the same state as the first state S1.

In the third state S3, the inkjet-printing ink 103 adheres to the print medium 101 until a predetermined time elapses. In this state, the aqueous medium 104 is gradually evaporating. The print medium 101 is heated by the first heater 13, and the heat is transmitted to the inkjet-printing ink 103 to facilitate evaporation of the aqueous medium 104.

In the fourth state S4, the inkjet-printing ink 103 is immediately before being irradiated with UV rays by the UV irradiator 14. In this state, the aqueous medium 104 evaporates further than in the third state S3. For example, the aqueous medium 104 may have completed evaporating. When the aqueous medium 104 has completed evaporating, components in the inkjet-printing ink 103 other than the aqueous medium 104, or more specifically, the first particles 105, the second particles 106, and the UV absorber 107 remain on the print medium 101.

In the fifth state S5, the inkjet-printing ink 103 is being irradiated with UV rays by the UV irradiator 14. In this state, the pigment 108 and the UV absorber 107 absorb the UV rays and generate heat. This heat melts the first resin contained in the first particles 105 and the second resin contained in the second particles 106. After the irradiation with UV rays is complete, the temperature of the inkjet-printing ink 103 falls, the first resin contained in the first particles 105 and the second resin contained in the second particles 106 are cured, and a cured resin 110 fixes the image formed with the pigment 108. The pigment 108 is mainly covered with the second resin.

As described above, techniques in various aspects are described herein, and some of the main techniques are overviewed below.

An inkjet-printing ink according to a first aspect includes first particles each containing a pigment and a first resin, second particles each containing a second resin, an ultraviolet absorber, and an aqueous medium. The second particles have a smaller average particle diameter than the first particles.

An inkjet-printing ink according to a second aspect is the inkjet-printing ink according to the first aspect in which the second particles have a particle diameter variation not more than 7 nm in standard deviation σ.

An inkjet-printing ink according to a third aspect is the inkjet-printing ink according to the first aspect or the second aspect in which the second resin has a weight-average molecular weight of 300,000 to 1,500,000 inclusive.

An inkjet-printing ink according to a fourth aspect is the inkjet-printing ink according to any one of the first to third aspects in which the first particles include not more than 70,000 pieces/mL of coarse particles with a particle diameter of 2 to 10 µm inclusive.

An inkjet-printing ink according to a fifth aspect is the inkjet-printing ink according to any one of the first to fourth aspects in which the second particles have a zeta potential with an absolute value greater than an absolute value of a zeta potential of the first particles.

An inkjet-printing ink according to a sixth aspect is the inkjet-printing ink according to any one of the first to fifth aspects in which the second particles have a zeta potential with an absolute value not less than 50 mV.

An inkjet-printing ink according to a seventh aspect is the inkjet-printing ink according to any one of the first to sixth aspects in which the ultraviolet absorber has an average particle diameter not more than an average particle diameter of the first particles.

An inkjet-printing ink according to an eighth aspect includes first particles each containing a pigment and a first resin, an ultraviolet absorber, and an aqueous medium. The ultraviolet absorber has an average particle diameter not more than an average particle diameter of the first particles.

An inkjet-printing ink according to a ninth aspect is the inkjet-printing ink according to the eighth aspect further including second particles each containing a second resin.

An inkjet-printing ink according to a tenth aspect is the inkjet-printing ink according to any one of the first to ninth aspects in which a content of the ultraviolet absorber is 0.1 to 1.6 mass% inclusive.

An inkjet-printing ink according to an eleventh aspect includes first particles each containing a pigment and a first resin, an ultraviolet absorber, and an aqueous medium. A content of the ultraviolet absorber is 0.1 to 1.6 mass% inclusive.

An inkjet-printing ink according to a twelfth aspect is the inkjet-printing ink according to the eleventh aspect further including second particles each containing a second resin.

An inkjet head according to a thirteenth aspect includes a plurality of exhaust ports that ejects the inkjet-printing ink according to any one of the first to twelfth aspects onto a print medium. The plurality of exhaust ports each has a diameter of 10 to 15 µm inclusive.

An inkjet recording device according to a fourteenth aspect includes an ejector including at least one inkjet head that ejects the inkjet-printing ink according to any one of the first to twelfth aspects onto a print medium, a transporter that transports the print medium to receive the inkjet-printing ink ejected from the at least one inkjet head, and an ultraviolet irradiator that irradiates the print medium receiving the inkjet-printing ink with an ultraviolet ray.

An inkjet recording device according to a fifteenth aspect is the inkjet recording device according to the fourteenth aspect in which the print medium is transported at a speed of 80 to 120 m/min inclusive.

An inkjet recording device according to a sixteenth aspect is the inkjet recording device according to the fourteenth aspect or the fifteenth aspect in which the inkjet-printing ink is ejected at a driving frequency of 60 to 100 kHz inclusive.

An inkjet recording device according to a seventeenth aspect is the inkjet recording device according to any one of the fourteenth to sixteenth aspects in which the transporter transports a film as the print medium.

The inkjet-printing ink according to the above aspects of the present invention has high quick-drying characteristics and high fixation. Additionally, the inkjet-printing ink is applicable to the inkjet head and the inkjet recording device according to the above aspects of the present invention.

The present invention is described in more detail below with reference to examples, but the scope of the invention is not limited to the examples.

### Examples

### Manufacture Example 1: Synthesis of First Resin

A first resin in the present example is prepared by synthesis. More specifically, the first resin is prepared by synthesis with the method below.

Styrene (FUJIFILM Wako Pure Chemical Corporation), butyl acrylate (FUJIFILM Wako Pure Chemical Corporation), methacrylic acid (FUJIFILM Wako Pure Chemical Corporation), and methoxypolyethylene glycol methacrylate (PLEMMER PME-200 from NOF CORPORATION) were mixed at a mass ratio of 65:20:5:10, and 115 parts by mass of a monomer-mixed solution was prepared by the mixing.

Thereafter, 10 mass% (more specifically, 11.5 parts by mass) of the monomer-mixed solution, 18 parts by mass of methyl ethyl ketone and 0.03 parts by mass of 2-mercaptoethanol serving as a chain transfer agent were added to a reaction vessel and mixed together, and the resultant underwent thorough nitrogen purging. The remaining 90 mass% (more specifically, 103.5 parts by mass) of the monomer-mixed solution, 0.27 parts by mass of the chain transfer agent, 42 parts by mass of methyl ethyl ketone, and 3 parts by mass of 2,2'-azobis(2,4-dimethylvaleronitrile) (FUJIFILM Wako Pure Chemical Corporation) serving as a polymerization initiator were mixed together, and the mixed solution was added into a dropping funnel. The temperature of the mixed solution in the reaction vessel was raised to 75 °C while the mixed solution was agitated under a nitrogen atmosphere, and the mixed solution in the dropping funnel was dripped into the reaction vessel over three hours. At 75 °C and two hours after the dripping was complete, a solution of 3 parts by mass of the polymerization initiator dissolved in 5 parts by mass of methyl ethyl ketone was added into the reaction vessel. The resultant was then left at 75 °C for two hours and at 80 °C for two hours to mature. Thereafter, 50 parts by mass of methyl ethyl ketone was added into the reaction vessel.

Thus, a first resin solution in the present example was obtained. The weight-average molecular weight of the obtained first resin measured by the GPC analysis was about 15,000. The glass transition temperature Tg of the first resin measured by the DSC analysis was about 60 °C. The solid content density in the first resin solution was about 45 mass%. Manufacture Example 2: Manufacture of First Particles

First particles used in the present example were manufactured. More specifically, first particles were manufactured in the method below.

To prepare a solution, 95.2 parts by mass of the first resin solution obtained from the manufacture example 1 was dissolved in 53.9 parts by mass of methyl ethyl ketone, 15.0 parts by mass of 5N aqueous sodium hydroxide and 0.5 parts by mass of 25 mass% ammonia water were added as neutralizers into the resultant solution, and 341.3 parts by mass of ion-exchanged water was then further added into the resultant solution. Additionally, 100 parts by mass of C.I. Pigment Black 7 (PB 7 from Cabot Corporation) serving as a carbon black pigment was further added into the resultant solution to obtain a pigment mixture. The degree of neutralization was about 79 mol%.

The obtained pigment-mixed solution was mixed using a dispersion blade for one hour at 7000 rpm and 20 °C. The obtained dispersion underwent a 15-pass dispersion process performed by a bead mill (LMZ015 from Ashizawa Finetech Ltd.) with a bead diameter of 0.3 mm at a rotational rate of a rotor of 3000 rpm.

Methyl ethyl ketone was removed from the obtained dispersion under reduced pressure at 60 °C, and then water was further removed. Additionally, the dispersion from which methyl ethyl ketone and water were removed was centrifuged, and the liquid part was filtered with a filter (Minisart Syringe Filter from Sartorius AG, with a pore size of 5 µm and made of cellulose acetate) to remove coarse particles. A water dispersion containing the black pigment and the first resin was thus obtained.

To 100 parts by mass of the obtained a water dispersion, 0.45 parts by mass of an epoxy crosslinker (trimethylolpropane polyglycidyl ether, or DENACOL EX-321L from Nagase ChemteX Corporation, containing epoxy equivalent of 130) and 15.23 parts by mass of ion-exchanged water were added, and the resultant was heated for three hours at 70 °C while being agitated.

The heated water dispersion was then cooled to room temperature, and the liquid part was filtered with a filter (Minisart Syringe Filter from Sartorius AG, with a pore size of 5 µm and made of cellulose acetate) to remove coarse particles. A water dispersion in which first particles each containing the black pigment and the first resin were dispersed was thus obtained.

The obtained water dispersion (water dispersion in which first particles each containing the black pigment and the first resin were dispersed) had a solid content density of 22 mass%. The water dispersion contained 68.76 mass% of pigment. The contents of the black pigment, the first resin, the epoxy crosslinker, and the ion-exchanged water in the water dispersion were respectively 15.13, 6.48, 0.39, and 78.00 parts by mass, with respect to 100 parts by mass of the water dispersion. The average particle diameter of the first particles was calculated as 100 nm by determining a dynamical structure factor by dynamic scattering using a particle size analyzer (zeta-potential, particle-size, and molecular-weight analysis system ELSZneo from Otsuka Electronics Co., Ltd.) using a helium-neon (HeNe) laser as a light source, and then performing a cumulant analysis. Note that the water dispersion had a viscosity of 4.8 mPa per second and a pH of 9.7.

### Manufacture Example 3: Manufacture of Water Dispersion Containing Second Particles

Styrene (FUJIFILM Wako Pure Chemical Corporation), butyl acrylate (FUJIFILM Wako Pure Chemical Corporation), methacrylic acid (FUJIFILM Wako Pure Chemical Corporation), and methoxypolyethylene glycol methacrylate (PLEMMER PME-200 from NOF CORPORATION) were mixed in a mass ratio of 80:5:10:5 in a 1000-mL separable flask, and 200 parts by mass of a monomer-mixed solution was prepared by mixing. To the monomer mixed-solution, 18.5 parts by mass of an emulsifier (LATEMUL E-118B from Kao Corporation containing 26 mass% of an active component), 96 parts by mass of ion-exchanged water, and potassium persulfate (FUJIFILM Wako Pure Chemical Corporation) were added, and the resultant was agitated with an agitation blade (at 300 rpm) to obtain a monomer emulsion.

To a reaction vessel, 4.6 parts by mass of LATEMUL E-118B, 186 parts by mass of ion-exchanged water, and 0.08 parts by mass of potassium persulfate were added, and the mixture underwent nitrogen purging. The temperature of the liquid in the reaction vessel was raised to 80 °C while the liquid was being agitated with an agitation blade (200 rpm) under nitrogen atmosphere. The monomer emulsion was dripped with a dropping funnel into the reaction vessel over three hours for reaction. Thus, a water dispersion in which the second particles each containing the second resin were dispersed was obtained.

The obtained water dispersion (water dispersion in which the second particles each containing the second resin were dispersed) had a solid content density of about 42 mass%. The average particle diameter of the second particles was calculated as 100 nm by observing, with an SEM, the second particles from which the aqueous medium was removed by drying, and performing an image analysis on the obtained image.

### Manufacture Example 4: Manufacture of Inkjet-Printing Ink

Then, 508.9 g of the water dispersion (solid content of 22.0 mass%) in which the first particles obtained from the manufacture example 2 and containing the black pigment and the first resin were dispersed, 48.3 g of the water dispersion (solid content of 41.6 mass%) containing the second particles obtained from the manufacture example 3, 44.0 g of diethylene glycol monoisobutyl ether (boiling point of 230 °C), 286.0 g of propylene glycol (boiling point of 188 °C), 5.5g of silicone-based surfactant (polyether-modified silicone, or KF-6011 from Shin-Etsu Chemical Co., Ltd. with HLB of 14.5), 50.9 g of benzotriazole-based UV absorber (2-(2'-hydroxy-5'-methylphenyl) benzotriazole, or TinuvinP from BASF SE) serving as a UV absorber, and 207.3g of ion-exchanged water were mixed. The obtained mixed solution was then filtered with a filter (Minisart Syringe Filter from Sartorius AG, with a pore size of 5 µm and made of cellulose acetate) to obtain black inkjet-printing ink. Note that the average particle diameter of the UV absorber was calculated as 60 nm by determining a dynamical structure factor by dynamic scattering using a particle size analyzer (zeta-potential, particle-size, and molecular-weight analysis system ELSZneo from Otsuka Electronics Co., Ltd.) using a helium-neon (HeNe) laser as a light source, and then performing a cumulant analysis.

In the obtained inkjet-printing ink, the contents of the water dispersion in which the first particles were dispersed, the water dispersion in which the second particles were dispersed, propylene glycol, diethylene glycol monoisobutyl ether, the silicone-based surfactant, and the benzotriazole-based UV absorber were respectively 508.9, 48.3, 286.0, 44.0, 5.5, 207.3, and 50.9 parts by mass. Note that the average particle diameter of particles included in the inkjet-printing ink was 98.8 nm. The inkjet-printing ink had a viscosity of 5.2 mPa per second at 32 °C, a dynamic surface tension of 28.9 mN/m, and a pH of 9.1. Relationship in Average Particle Diameter between First Particles and Second Particles

The relationship in average particle diameter between the first particles and the second particles was then studied. More specifically, inkjet-printing ink was manufactured in the same manner as or in a similar manner to those in the manufacture example 4 except for using the first particles with the average particle diameters shown in Table 1 and the second particles with the average particle diameters shown in Table 1. Additionally, the first particles with the respective average particle diameters shown in Table 1 were prepared by processing, with a bead mill, the water dispersion in which the first particles manufactured in the manufacture example 2 were dispersed, adjusting the processing conditions, and adjusting the number of passes through the filter. Additionally, the second particles with the respective average particle diameters shown in Table 1 were prepared by adjusting conditions of agitation with an agitation blade to manufacture the water dispersion in which the second particles manufactured in the manufacture example 3 were dispersed, and adjusting the number of passes through the filter. Note that the zeta potentials of the first particles with an average particle diameter of 100 µm and the second particles with an average particle diameter of 80 µm measured by a zeta potential analyzer (zeta-potential, particle-size, and molecular-weight analysis system ELSZneo from Otsuka Electronics Co., Ltd.) were respectively -45 and -60 mV.

The examples of the inkjet-printing ink thus obtained were evaluated as below.

### Change in Weight Caused by Heating

Each of the examples of the inkjet-printing ink was applied to a film with a bar coater, and the weight (weight before heating) of the inkjet-printing ink applied to the film was measured. Thereafter, the film to which the inkjet-printing ink was applied was dried at 40 °C by a drier for forty minutes, and the weight (weight after heating) of the dried inkjet-printing ink was measured. Based on the weight before heating and the weight after heating, a weight change rate was calculated. As the weight change rate is higher, the inkjet-printing ink has higher quick-drying characteristics, for example, the inkjet-printing ink with a weight change rate of not less than 54% was evaluated as "good," and the inkjet-printing ink with a weight change rate of lower than 54% was evaluated as "poor."

### Tape Release

Each of the examples of the inkjet-printing ink was applied to a film with a bar coater to form a black image. The obtained black image underwent a cross-cut test (in conformity with JIS K5600-5-6). The image less easily released in the cross-cut test has higher fixation. For example, the cross-cut test was conducted on 25 print media each carrying a printed image. When the images were released from not more than two media (more specifically, not more than "2/25"), the inkjet-printing ink was evaluated as "good," and when the images were released from more than or equal to three media (more specifically, more than or equal to "3/25"), the inkjet-printing ink was evaluated as "poor."

Each of the examples of the inkjet-printing ink having both the "change in weight caused by heating" and the "tape release" evaluated as "good" is usable to print a black image with high fixation independently of when, for example, an inkjet recording device medium illustrated in FIG. 1 that includes an inkjet head with an exhaust port with a diameter of 12 µm performs printing using each of the examples of the inkjet-printing ink, while transporting the print medium at a transport speed of 100 m/min and ejecting the inkjet-printing ink at a driving frequency (ejection frequency) of 78.74 kHz.

Table 1 shows the test results.

**Table 1**

| Average particle diameter (nm) | | Change in weight caused by heating | | Tape release | |
|---|---|---|---|---|---|
| First particle | Second particle | | | | |
| 90 | 70 | 55% | good | 0/25 | good |
| | 80 | 55% | good | 1/25 | good |
| | 90 | 53% | poor | 3/25 | poor |
| | 100 | 52% | poor | 3/25 | poor |
| | 120 | 52% | poor | 4/25 | poor |
| 100 | 70 | 55% | good | 0/25 | good |
| | 80 | 55% | good | 1/25 | good |
| | 90 | 55% | good | 2/25 | good |
| | 100 | 53% | poor | 3/25 | poor |
| | 120 | 52% | poor | 4/25 | poor |
| | 140 | 52% | poor | 5/25 | poor |

Table 1 shows that, for the second particles having a smaller average particle diameter than the first particles, the inkjet-printing ink has higher quick-drying characteristics and higher fixation than for the second particles having an average particle diameter larger than or equal to the first particles. Table 1 also shows that the inkjet-printing ink has higher quick-drying characteristics and higher fixation when the first particles with the zeta potential of an absolute value of 45 mV, and the second particles with the zeta potential of an absolute value of 60 mV are used. This reveals that the zeta potential of the second particles having a greater absolute value than the zeta potential of the first particles and the zeta potential of the second particles having an absolute value of not less than 50 mV improve quick-drying characteristics and fixation.

### Content of Coarse Particles in First Particle Diameter, Particle Diameter Variation σ of Second Particles, and Weight-Average Molecular Weight of Second Resin

The effects of the content of coarse particles in the first particle diameter, the particle diameter variation σ of the second particles, and the weight-average molecular weight of the second resin on the first particles with an average particle diameter of 100 nm and the second particles with an average particle diameter of 80 nm were then studied. More specifically, the inkjet-printing ink was manufactured in the same manner as or in a similar manner to those in the manufacture example 4 except for using the first particles and the second particles with the content of coarse particles in the first particle diameter, the particle diameter variation σ of the second particles, and the weight-average molecular weight of the second resin shown in Table 2. Additionally, the first particles with the content of coarse particles shown in Table 2 were prepared by processing, with the bead mill, the water dispersion in which the first particles manufactured in the manufacture example 2 were dispersed, adjusting the processing conditions, and adjusting the number of passes through the filter. Note that the above coarse particles have a particle diameter of 2 to 10 µm inclusive. Additionally, the second particles with respective particle diameter variations σ shown in Table 2 were prepared by adjusting conditions of agitation with an agitation blade to manufacture the water dispersion in which the second particles manufactured in the manufacture example 3 were dispersed, and adjusting the number of passes through the filter. Additionally, the second particles including the second resin with the weight-average molecular weights shown in Table 2 were prepared by adjusting synthesis conditions of the second resin in the manufacture example 3. Note that, in this examination example, the inkjet-printing ink including the first particles with an average particle diameter of 100 nm and the second particles with an average particle diameter of 80 nm had high quick-drying characteristics and high fixation.

The examples of the inkjet-printing ink thus obtained were evaluated as below.

### Variation in Ejection Speed

Each of the examples of the inkjet-printing ink was ejected from a 1200-dpi head from KYOCERA Corporation, and the ejected droplets were observed with an inkjet droplet observation device (JetXpert from imageXpert LLC) to measure the variation in the ejection speed (standard deviation σ) of the droplets. The inkjet-printing ink with this variation (ink ejection variation) not more than 0.6 m/sec was evaluated as "good," and inkjet-printing ink with this variation greater than 0.6 m/sec was evaluated as "poor." The inkjet-printing ink with less ink ejection variation is usable to form intended images with high-speed printing. For example, each of the examples of the inkjet-printing ink having the variation evaluated as "good" is usable to print a black image independently of when, for example, the inkjet recording device medium illustrated in FIG. 1 that includes an inkjet head with an exhaust port of a diameter of 12 µm performs printing using each of the examples of the inkjet-printing ink, while transporting the print medium at a transport speed of 100 m/min and ejecting the inkjet-printing ink at a driving frequency (ejection frequency) of 78.74 kHz.

Note that the average speed of ejecting droplets was about 9 m/sec. The ejection speed may be 6 to 15 m/sec inclusive.

Table 2 shows the test results.

**Table 2**

| First particle | Second particle | | Variation in ejection speed (m/sec) | |
|---|---|---|---|---|
| Coarse particle (Piece/mL) | Particle diameter variation σ (nm) | Weight-average molecular weight of second resin | | |
| 30,000 | 3 | 300,000 | 0.3 | good |
| 50,000 | 3 | 300,000 | 0.4 | good |
| 70,000 | 3 | 300,000 | 0.5 | good |
| 100,000 | 3 | 300,000 | 0.7 | poor |
| 30,000 | 5 | 800,000 | 0.3 | good |
| 50,000 | 5 | 800,000 | 0.4 | good |
| 70,000 | 5 | 800,000 | 0.5 | good |
| 100,000 | 5 | 800,000 | 0.7 | poor |
| 30,000 | 7 | 1,500,000 | 0.4 | good |
| 50,000 | 7 | 1,500,000 | 0.5 | good |
| 70,000 | 7 | 1,500,000 | 0.6 | good |
| 100,000 | 7 | 1,500,000 | 0.8 | poor |
| 30,000 | 10 | 2,200,000 | 0.7 | poor |
| 50,000 | 10 | 2,200,000 | 0.8 | poor |
| 70,000 | 10 | 2,200,000 | 0.9 | poor |

Table 2 reveals that the inkjet-printing ink has a smaller ink ejection variation for the second particles having a particle diameter variation not more than 7 nm in the standard deviation σ than for the second particles having a particle diameter variation more than 7 nm. Table 2 further reveals that the inkjet-printing ink has a smaller ink ejection variation for the second resin having a weight-average molecular weight of 300,000 to 1,500,000 than for the second resin having a weight-average molecular weight greater than 1,500,000. Table 2 further reveals that the inkjet-printing ink has a smaller ink ejection variation for the first particles including not more than 70,000 pieces/mL of coarse particles with a particle diameter of 2 to 10 µm, than for the first particles including more than 70,000 pieces/mL of the coarse particles.

### Average Particle Diameter of UV Absorber

The effects of the average particle diameter of the UV absorber in the inkjet-printing ink including the first particles with an average particle diameter of 100 nm and the second particles with an average particle diameter of 80 nm were then studied. More specifically, the inkjet-printing ink was manufactured in the same manner as or in a similar manner to those in the manufacture example 4 except for preparing UV absorbers with the average particle diameters shown in Table 3, and using the UV absorbers, the first particles with the average particle diameter shown in Table 3, and the second particles with the average particle diameter shown in Table 3. Note that, in this examination example, the inkjet-printing ink including the first particles with an average particle diameter of 100 nm and the second particles with an average particle diameter of 80 nm had high quick-drying characteristics and high fixation.

The examples of the inkjet-printing ink thus obtained were evaluated as below.

### Weatherability

Each of the examples of the inkjet-printing ink was applied to OK TopKote serving as a print medium with a bar coater to form a black image. The optical density (OD) of the obtained black image was measured with a spectrodensitometer from X-Rite, Inc. The black image then underwent a xenon irradiation test at an illuminance of 100,000 lux per hour using a xenon accelerated weathering tester (Q-SUN Xe-3 from Q-Lab Corporation) for four days. The optical density of the black image that has undergone the xenon irradiation test was measured with the spectrodensitometer, and its change rate was obtained. This change rate indicates a change rate of the hue. The inkjet-printing ink with a smaller absolute value of the change rate has higher weatherability, for example, the inkjet-printing ink with the absolute value of not more than 6% (e.g., not less than -6%) was evaluated as "good," and the inkjet-printing ink with the absolute value of greater than 6% (e.g., less than -6%) was evaluated as "poor."

Table 3 shows the test results.

**Table 3**

| Average particle diameter (nm) | | | Weatherability | |
|---|---|---|---|---|
| First particle | Second particle | Ultraviolet absorber | | |
| 100 | 80 | 60 | -3% | good |
| | | 80 | -4% | good |
| | | 100 | -5% | good |
| | | 120 | -7% | poor |
| | | 140 | -8% | poor |

Table 3 reveals that the inkjet-printing ink including the UV absorber with a smaller average particle diameter than the average particle diameter of the first particles can form images with higher weatherability than the inkjet-printing ink including the UV absorber with a greater average particle diameter than the average particle diameter of the first particles. More specifically, Table 3 reveals that the above inkjet-printing ink can form images with high quick-drying characteristics, high fixation, and high weatherability.

The above example is an example of using the first particles obtained from the manufacture example 2 and including the black pigment and the first resin as the first particles. A case in which a pigment (cyan pigment, magenta pigment, and yellow pigment) other than the black pigment was used instead of the black pigment was also studied as below. Cyan

The example case was studied as in using the first particles including the black pigment and the first resin, except for using first particles including a cyan pigment and the first resin manufactured in the manner described below, as the first particles, instead of the first particles including the black pigment and the first resin.

### First Particles: Manufacture of First Particles Including Cyan Pigment and First Resin

The first particles including the cyan pigment and the first resin were manufactured in the same manner as or in a similar manner to those in the manufacture example 2 (manufacture of first particles) except for using C.I. Pigment Blue 15:3 (PB 15:3 from DIC Corporation) as a cyan pigment instead of the black pigment.

Note that the solid content density of the water dispersion in which the first particles including the cyan pigment and the first resin were dispersed was 22 mass%. The pigment content rate was 68.52 mass%. In the water dispersion, the contents of the cyan pigment, the first resin, the epoxy crosslinker, and the ion-exchanged water were respectively 15.08, 6.46, 0.46, and 78.00 parts by mass, with respect to 100 parts by mass of the water dispersion. The average particle diameter of the first particles was calculated as 100 nm by determining a dynamical structure factor by dynamic scattering using a particle size analyzer (zeta-potential, particle-size, and molecular-weight analysis system ELSZneo from Otsuka Electronics Co., Ltd.) using a helium-neon (HeNe) laser as a light source, and then performing a cumulant analysis. Note that the water dispersion had a viscosity of 4.2 mPa per second and a pH of 9.6.

### Magenta

The example case was studied as in using the first particles including the black pigment and the first resin, except for using first particles including a magenta pigment and the first resin manufactured in the manner described below, as the first particles, instead of the first particles including the black pigment and the first resin.

### First Particles: Manufacture of First Particles Including Magenta Pigment and First Resin

The first particles including the magenta pigment and the first resin were manufactured in the same manner as or in a similar manner to those in the manufacture example 2 (manufacture of first particles) except for using C.I. Pigment Red 150 (PR 150 from Fuji Pigment Co., Ltd.) as a magenta pigment instead of the black pigment.

Note that the solid content density of the water dispersion in which the first particles including the magenta pigment and the first resin are dispersed was 22 mass%. The pigment content rate was 68.52 mass%. In the water dispersion, the contents of the magenta pigment, the first resin, the epoxy crosslinker, and the ion-exchanged water were respectively 15.08, 6.46, 0.46, and 78.00 parts by mass, with respect to 100 parts by mass of the water dispersion. The average particle diameter of the first particles was calculated as 100 nm by determining a dynamical structure factor by dynamic scattering using a particle size analyzer (zeta-potential, particle-size, and molecular-weight analysis system ELSZneo from Otsuka Electronics Co., Ltd.) using a helium-neon (HeNe) laser as a light source, and then performing a cumulant analysis. Note that the water dispersion had a viscosity of 4.6 mPa per second and a pH of 9.8.

### Yellow

The example case was studied as in using the first particles including the black pigment and the first resin, except for using first particles including a yellow pigment and the first resin manufactured in the manner described below, as the first particles, instead of the first particles including the black pigment and the first resin.

### First Particles: Manufacture of First Particles Including Yellow Pigment and First Resin

The first particles including the yellow pigment and the first resin were manufactured in the same manner as or in a similar manner to those in the manufacture example 2 (manufacture of first particles) except for using C.I. Pigment Yellow 74 (PY 74 from Dainichiseika Color & Chemicals Mfg. Co., Ltd.) as a yellow pigment instead of the black pigment.

Note that the solid content density of the water dispersion in which the first particles including the yellow pigment and the first resin are dispersed was 22 mass%. The pigment content rate was 68.52 mass%. In the water dispersion, the contents of the yellow pigment, the first resin, the epoxy crosslinker, and the ion-exchanged water were respectively 15.08, 6.46, 0.46, and 78.00 parts by mass, with respect to 100 parts by mass of the water dispersion. The average particle diameter of the first particles was calculated as 100 nm by determining a dynamical structure factor by dynamic scattering using a particle size analyzer (zeta-potential, particle-size, and molecular-weight analysis system ELSZneo from Otsuka Electronics Co., Ltd.) using a helium-neon (HeNe) laser as a light source, and then performing a cumulant analysis. Note that the water dispersion had a viscosity of 4.5 mPa per second and a pH of 9.6.

As in the examples described above, the cases of using, as the first particles, first particles including a pigment other than the black pigment (each of the cyan pigment, the magenta pigment, and the yellow pigment) and the first resin instead of the first particles including the black pigment and the first resin obtained from the manufacture example 2 were studied. Thus, all the examples had the same or similar results as or to the example using the first particles including the black pigment and the first resin. More specifically, the same or similar results as or to the results obtained from using the black pigment were obtained from using either the cyan pigment, the magenta pigment, or the yellow pigment. These examples reveal that the inkjet-printing ink has high quick-drying characteristics and high fixation when the second particles have a smaller average particle diameter than the first particles, independently of the color of the pigment.

The present application is based on Japanese Patent Application No. 2023-003921 filed on January 13, 2023, the contents of which are incorporated herein by reference.

To describe the present invention, the present invention has been appropriately and sufficiently described through embodiments as above. However, those skilled in the art can easily at least change or improve the above embodiments. Therefore, unless such changes or improvements made by those skilled in the art depart from the scope of the claims, such changes or improvements are construed as being included within the scope of the claims.

### INDUSTRIAL APPLICABILITY

The inkjet-printing ink according to one or more embodiments of the present invention has high quick-drying characteristics and high fixation. The inkjet-printing ink is applicable to the inkjet head and the inkjet recording device according to one or more embodiments of the present invention.

### REFERENCE SIGNS

- 10: inkjet recording device
- 11: transporter
- 11A: feed roller
- 11B: take-up roller
- 12: ejector
- 13: first heater
- 13A: first heating roller
- 14: UV irradiator
- 14A: light source
- 15: second heater
- 15A: second heating roller
- 16: controller
- 17: ink tank
- 21: inkjet head
- 21a: ejection surface
- 21b: exhaust port
- 101: print medium
- 103: inkjet-printing ink
- 104: aqueous medium
- 105: first particle
- 106: second particle
- 107: UV absorber
- 108: pigment
- 109: first resin
- 110: resin

## Claims

1. An inkjet-printing ink, comprising:
first particles each containing a pigment and a first resin;
second particles each containing a second resin;
an ultraviolet absorber; and
an aqueous medium,
wherein the second particles have a smaller average particle diameter than the first particles.

2. The inkjet-printing ink according to claim 1, wherein
the second particles have a particle diameter variation not more than 7 nm in standard deviation σ.

3. The inkjet-printing ink according to claim 1 or claim 2, wherein
the second resin has a weight-average molecular weight of 300,000 to 1,500,000 inclusive.

4. The inkjet-printing ink according to any one of claims 1 to 3, wherein
the first particles include not more than 70,000 pieces/mL of coarse particles with a particle diameter of 2 to 10 µm inclusive.

5. The inkjet-printing ink according to any one of claims 1 to 4, wherein
the second particles have a zeta potential with an absolute value greater than an absolute value of a zeta potential of the first particles.

6. The inkjet-printing ink according to any one of claims 1 to 5, wherein
the second particles have a zeta potential with an absolute value not less than 50 mV.

7. The inkjet-printing ink according to any one of claims 1 to 6, wherein
the ultraviolet absorber has an average particle diameter not more than an average particle diameter of the first particles.

8. An inkjet-printing ink, comprising:
first particles each containing a pigment and a first resin;
an ultraviolet absorber; and
an aqueous medium,
wherein the ultraviolet absorber has an average particle diameter not more than an average particle diameter of the first particles.

9. The inkjet-printing ink according to claim 8, further comprising:
second particles each containing a second resin.

10. The inkjet-printing ink according to any one of claims 1 to 9, wherein
a content of the ultraviolet absorber is 0.1 to 1.6 mass% inclusive.

11. An inkjet-printing ink, comprising:
first particles each containing a pigment and a first resin;
an ultraviolet absorber; and
an aqueous medium,
wherein a content of the ultraviolet absorber is 0.1 to 1.6 mass% inclusive.

12. The inkjet-printing ink according to claim 11, further comprising:
second particles each containing a second resin.

13. An inkjet head, comprising:
a plurality of exhaust ports configured to eject the inkjet-printing ink according to any one of claims 1 to 12 onto a print medium,
wherein the plurality of exhaust ports each has a diameter of 10 to 15 µm inclusive.

14. An inkjet recording device, comprising:
an ejector including at least one inkjet head configured to eject the inkjet-printing ink according to any one of claims 1 to 12 onto a print medium;
a transporter configured to transport the print medium to receive the inkjet-printing ink ejected from the at least one inkjet head; and
an ultraviolet irradiator configured to irradiate the print medium receiving the inkjet-printing ink with an ultraviolet ray.

15. The inkjet recording device according to claim 14, wherein
the print medium is transported at a speed of 80 to 120 m/min inclusive.

16. The inkjet recording device according to claim 14 or claim 15, wherein
the inkjet-printing ink is ejected at a driving frequency of 60 to 100 kHz inclusive.

17. The inkjet recording device according to any one of claims 14 to 16, wherein
the transporter transports a film as the print medium.
